# EUROPÄISCHE PATENTSCHRIFT

(11) **EP 0 506 895 B1**
(45) Veröffentlichungstag und Bekanntmachung des Hinweises auf die Patenterteilung: **10.05.1995**
(21) Anmeldenummer: 91914911.2
(22) Anmeldetag: 06.09.1991
(51) Int. Cl.: B60T 8/26, B60T 11/34

(54) **BREMSKRAFTREGLER MIT ELEKTRISCH ANGESTEUERTER SPERRVORRICHTUNG**
BRAKING FORCE REGULATOR WITH ELECTRICALLY CONTROLLED LOCKING DEVICE
SYSTEME DE REGULATION DE LA PUISSANCE DE FREINAGE AVEC DISPOSITIF DE COUPURE A COMMANDE ELECTRIQUE

(30) Priorität: 28.09.1990 DE 4030686
(43) Veröffentlichungstag der Anmeldung: 07.10.1992
(73) Patentinhaber: ALFRED TEVES GmbH, 60441 Frankfurt (DE)
(72) Erfinder: CEZANNE, Rudolf, D-6394 Grävenwiesbach 5 (DE); HEUER, Rudolph, D-3170 Gifhorn (DE)
(74) Vertreter: Grau, Ulf
(86) Internationale Anmeldenummer: EP9101695
(87) Internationale Veröffentlichungsnummer: WO9205988

(56) Entgegenhaltungen:
- EP-A- 0 156 666
- EP-A- 0 161 131
- DE-A- 2 402 291
- DE-A- 3 742 364
- DE-A- 4 029 332
- FR-A- 2 624 462
- GB-A- 2 236 156

## Beschreibung

Die Erfindung betrifft einen Bremskraftregler mit elektrisch angesteuerter Sperrvorrichtung gemäß dem Oberbegriff des Anspruchs 1.

Ein derartiger Bremskraftregler ist aus der DE 37 42 173 A1 bekannt. Dem Regelventil, welches das Druckverhältnis zwischen Druckmitteleinlaß und Druckmittelauslaß des Bremskraftreglers regelt, ist ein elektromagnetisch betätigtes, stromlos geschlossenes Magnetventil parallel geschaltet, welches bei intakter Blockierschutzeinrichtung permanent bestromt wird, so daß die Verbindung zwischen Druckmitteleinlaß und Druckmittelauslaß kurzgeschlossen ist. Bei Ausfall der Blockierschutzeinrichtung wird der Strom abgeschaltet, so daß die Druckminderfunktion des Bremskraftreglers wirksam wird.

Ausgehend von diesem Prinzip liegt der vorliegenden Erfindung die Aufgabe zugrunde, weitere funktionelle Verbesserungen zu schaffen. Insbesondere sollen bei Twin-Bremskraftreglern für diagonale Bremskreisaufteilung beide Regelkreise mit einer gemeinsamen Ansteuerung gesperrt und entsperrt werden können.

Diese Aufgabe wird gelöst durch die Merkmale im kennzeichnenden Teil des Anspruchs 1. Durch diese Anordnung der Sperrvorrichtung werden bei gesperrten Regler vom Ansteuerelement auf das Betätigungselement nur radiale, also Normalkräfte, ausgeübt und zwar über die Verriegelungselemente, so daß die axiale Position des Betätigungselementes von diesen Kräften nicht beeinflußt wird. Daher ist auch ein Entsperren mit geringem Kraftaufwand möglich. Nach einer Instandsetzung der Blockierschutzeinrichtung ist der Regler leicht wieder zu sperren, da die Bremsleitungen dann drucklos und der bzw. die Regelkolben mit dem Ansteuerelement zurückgefahren sind, so daß die Verriegelungselemente vom Betätigungselement nur radial verschoben werden müssen.

Dieser Aufbau der Sperrvorrichtung eignet sich besonders gut auch für Twinregler, weil ein gemeinsamer Elektromagnet genug Kraft aufbringt beide Regeleinheiten zu sperren.

Es besteht die Möglichkeit, den Umschaltdruck des Reglers lastabhängig zu steuern, in dem die Steuerfeder, die das Ansteuerelement bei festem Umschaltdruck beaufschlagt, ersetzt wird durch eine mechanische, pneumatische, hydraulische oder auch elektromagnetische lastabhängige Beaufschlagung.

Eine besonders funktionssichere Lösung zeichnet sich durch eine Sperr- und Ansteuervorrichtung außerhalb des hydraulischen Regelkreises aus. Hierdurch erübrigt sich eine aufwendige Abdichtung der Sperreinrichtung. Anstelle einer direkte Betätigung von Ventilschließgliedern mittels eines Stößels - wie in bisherigen Lösungen vorgeschlagen - wird in der vorliegenden Erfindung auf den oder die Regelkolben eingewirkt, wobei jeder Regelkolben abgedichtet aus seiner Bohrung in den druckmittelfreien Raum ragt, wie es bei lastabhängigen, mechanisch angesteuerten Bremskraftreglern an sich bekannt ist.

Fällt die Blockierschutzeinrichtung während einer Bremsbetätigung aus, herrscht am Ausgang der volle Bremsdruck, da der Regler bis dahin gesperrt war. Der Regelkolben fährt zwar sofort in seine Druckminderposition, aber der schon vorhandene Ausgangsdruck würde die Hinterradbremsen blockieren, wenn er nicht gesenkt wird. Daher ist eine zusätzliche Druckabbauvorrichtung vorteilhaft, die, wenn das Ventil im Regelkolben geschlossen ist, eine Volumenvergrößerung im ausgangseitigen Bohrungsabschnitt herbeiführt. Zumindest sollte der Hub des Regelkolbens im entsperrten Zustand deutlich größer sein, als der Schließweg des Ventils im Regelkolben.

Weiter vorteilhafte Merkmale ergeben sich aus der nachfolgenden Beschreibung eines bevorzugten Ausführungsbeispiels anhand einer Zeichnung.

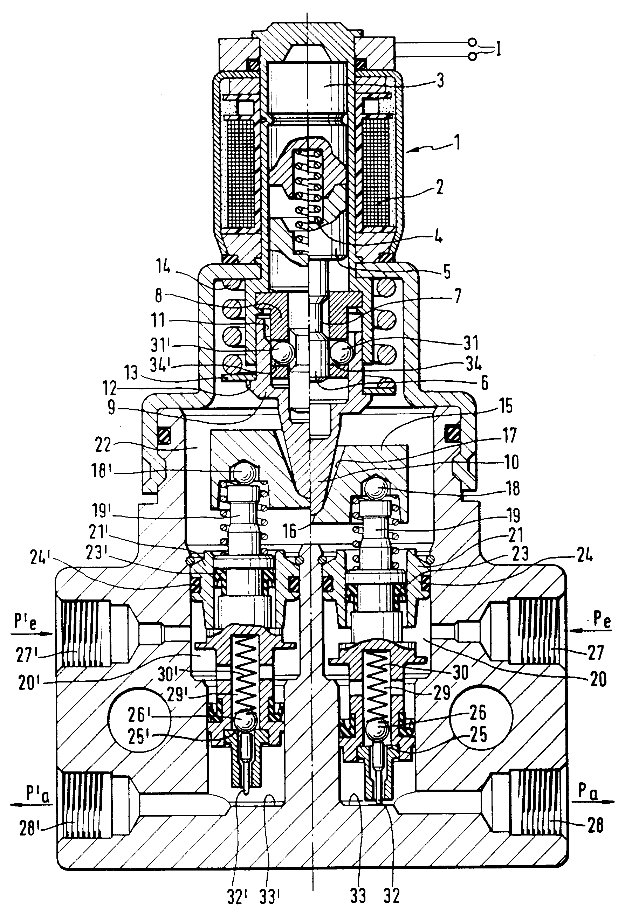

Die einzige Abbildung zeigt einen Twin-Bremskraftregler mit fest eingestelltem Umschaltdruck. In der rechten Hälfte der Abbildung werden die Positionen der Funktionselemente bei intakter Blockierschutzeinrichtung dargestellt, während sich die Anordnung in der linken Hälfte der Abbildung in Druckminderungsposition befindet nach Ausfall der Blockierschutzeinrichtung.

Die Ansteuer- und Sperrvorrichtung dieses Reglers besitzt einen elektromagnetischen Antrieb 1 mit der elektrischen Spule 2, welche mit dem Steuerstrom I versorgt wird und den gehäusefest verstemmten Magnetkern 3, sowie den von der Druckfeder 4 beaufschlagten, axial beweglichen Magnetanker 5 umgibt. Dieser Magnetanker 5 ist kraftschlüssig mit dem Betätigungselement 6 verbunden, welches kolbenförmig ist und eine radiale Ringnut 7 mit abgeschrägten Rändern aufweist.-Das Betätigungselement 6 verläuft durch die gehäusefeste Zwischenhülse 8. Diese ist von zwei radialen, einander gegenüberliegenden runden Löchern 34 und 34' durchbrochen, in denen jeweils ein kugelförmiges Verriegelungselement 31, bzw. 31' radial geführt ist. Das Ansteuerelement 9 ist topfartig geformt und besitzt am Boden einen Ansteuerfinger 10. Die Innenwand des topfartigen Teils des Ansteuerelementes 9 ist zur Öffnung hin mit einer abgeschrägten Erweiterungsstufung 11 versehen. Dieser topfartige Teil des Ansteuerelementes 9 umgibt axial verschiebbar einen Teil der Zwischenhülse.

Zur Einstellung des Umschaltdruckes des Bremskraftreglers ist das Ansteuerelement 9 von einer Steuerkraft beaufschlagt. Die abgebildete Ausführung mit fest eingestelltem Umschaltdruck besitzt an der Außenwand des Ansteuerelementes 9 einen umlaufenden radialen Vorsprung 12, welcher über die Ringscheibe 13 von der Kraft der Steuerfeder 14 beaufschlagt ist. Der Ansteuerfinger 10 ist wie ein spitzwinkliger Kegel mit abgerundeter Spitze 16 geformt und wirkt auf das Übertragungsglied 15 ein, in dem seine Spitze 16 in einer Vertiefung 17 des Übertragungselementes anliegt, wobei diese Vertiefung ebenfalls wie ein spitzwinkliger Kegel mit abgerundeter Spitze gestaltet ist, dessen Abrundung der der Spitze 16 des Ansteuerfingers 10 angepasst ist und dessen Öffnungswinkel größer ist, als der des Ansteuerfingers 10.

Nach Art eines Waagebalkens mit Lagerung an der Spitze 16 des Ansteuerfingers 10 beaufschlagt das Übertragungselement 15 über je eine der zwei Kugeln 18 und 18' die zwei Regelkolben 19 und 19'. Diese sind in je einer gestuften Bohrung 20 bzw. 20' axial geführt und ragen durch die gehäusefesten Führungshülsen 21 und 21' in den druckmittelfreien Raum 22, der das Übertragungselement 15 enthält.

Die Regelkolben 19 und 19' sind mit Hilfe der Dichtmanschetten 23 und 23' gegen die Führungshülsen 21 bzw. 21' abgedichtet, welche selbst mit den Dichtringen 24 und 24' druckmitteldicht an den Wänden der Bohrungen 20 bzw. 20' anliegen.

An den der Ansteuer- und Sperrvorrichtung abgewandten Enden der Regelkolben 19 und 19' sind die Ventilsitze 25 und 25' angebracht, die mit den Schließgliedern 26 bzw. 26' zusammenwirken. Letztere befinden sich jeweils in einem Hohlraum 29 oder 29' der Regelkolben 19 und 19' und werden von den Druckfedern 30 bzw. 30' auf die Ventilsitze 25 bzw. 25' hin beaufschlagt. Diese Ventile bilden jeweils den einzigen Druckmitteldurchlaß von den Einlässen 27 und 27' zu den Auslässen 28 bzw. 28'

Zur Erklärung der Funktion der Erfindung wird zunächst die rechte Hälfte der Abbildung herangezogen. Hier ist die Blockierschutzeinrichtung intakt, die Spule 2 wird also vom Steuerstrom I durchflossen und hält den Magnetanker 5 gegen die Kraft der Druckfeder 4 in ihrem Magnetfeld. Das Betätigungselement 6 befindet sich daher in einer Axialposition, in der es die Verriegelungselemente, hier das mit Bezugszeichen 31, radial soweit außen hält, daß sie an der Erweiterungsstufung 11 des Ansteuerelementes 9 anliegen und somit eine Axialbewegung des Ansteuerelementes 9 zum Antrieb 1 hin sperren.

Über das Übertragungsglied 15 und die Kugeln 18 bzw. 18' hält das Ansteuerelement 9 beide Regelkolben 19 und 19' in einer Axialposition, in der die Ventile, bestehend aus den Schließgliedern 26 bzw. 26' sowie den Ventilsitzen 25 bzw. 25', geöffnet sind, weil die Stößel 32 und 32' an den Stirnwänden 33 bzw. 33' der Bohrungen 20 und 20' anliegen und die Schließglieder 26 und 26' von den Ventilsitzen 25 und 25' fernhalten.

Dabei ist wichtig, daß die Regelkolben 19 und 19' nicht an den Stirnwänden 33 und 33' im Anschlag sind, damit ihnen auch bei gesperrtem Regler eine geringe Axialbewegung möglich ist, wenn der Umschaltdruck erreicht ist. So wird bewirkt, daß die Regelkolben nicht festbacken und auch über sehr lange Zeit funktionsfähig bleiben, solange die Blockierschutzeinrichtung intakt ist, da dies der Normalzustand ist.

In dieser gesperrten Position ist der Ausgangsdruck Pa gleich dem Eingangsdruck Pe.

Die linke Hälfte der Abbildung zeigt den Bremskraftregler in Druckminderposition, d.h. die Blockierschutzeinrichtung ist ausgefallen, und die Spule ist stromlos.

Das Betätigungselement 6 ist von der Druckfeder 4 in eine Position verschoben, wo die Ringnut 7 die Verriegelungselemente 31 und 31' soweit in sich aufnehmen kann, daß die Axialverschiebung des Ansteuerelementes 9 auf den Antrieb 1 zu nicht behindert ist.

Bei Erreichen des durch die Steuerfeder 14 festgelegten Umschaltdruckes nimmt der Bremskraftregler seine Druckminderungsfunktion auf. Die Regelkolben 19 und 19' verschieben sich in die in dieser linken Bildhälfte dargestellte Position, so daß die Schließglieder 26 und 26' dichtend auf den Ventilsitzen 25 bzw. 25' liegen, weil die Regelkolben 19 und 19' sich von den Stirnwänden 33 und 33' entfernt haben und die Stößel 32 und 32' an diesen nicht mehr anliegen. Bei weiterem Anstieg des Eingangsdruckes Pe' fahren die Regelkolben 19 und 19' in schneller Folge vor und zurück und mindern dadurch den Ausgangsdruck Pa' proportional zum Eingangsdruck Pe'.

### Bezugszeichenliste

- 1: Antrieb
- 2: Spule
- 3: Magnetkern
- 4: Druckfeder
- 5: Magnetanker
- 6: Betätigungselement
- 7: Ringnut
- 8: Zwischenhülse
- 9: Ansteuerelement
- 10: Ansteuerfinger
- 11: Erweiterungsstufung
- 12: Vorsprung
- 13: Ringscheibe
- 14: Steuerfeder
- 15: Übertragungsglied
- 16: Spitze
- 17: Vertiefung
- 18: Kugel
- 18': Kugel
- 19: Regelkolben
- 19': Regelkolben
- 20: Bohrung
- 20': Bohrung
- 21: Führungshülse
- 21': Führungshülse
- 22: Raum
- 23: Dichtmanschette
- 23': Dichtmanschette
- 24: Dichtring
- 24': Dichtring
- 25: Ventilsitz
- 25': Ventilsitz
- 26: Schließglied
- 26': Schließglied
- 27: Einlaß
- 27': Einlaß
- 28: Auslaß
- 28': Auslaß
- 29: Hohlraum
- 29': Hohlraum
- 30: Druckfeder
- 30': Druckfeder
- 31: Verriegelungselement
- 31': Verriegelungselement
- 32: Stößel
- 32': Stößel
- 33: Stirnwand
- 33': Stirnwand
- 34: Loch
- 34': Loch
- PE: Eingangsdruck
- PE': Eingangsdruck
- PA: Ausgangsdruck
- PA': Ausgangsdruck

## Patentansprüche

1. Bremskraftregler für die Hinterradbremsen eines Kraftfahrzeuges mit blockiergeschützter Bremsanlage, welcher eine Sperrvorrichtung mit elektromagnetischem Antrieb (1) aufweist, die den Bremskraftregler an seiner Druckminderungsfunktion hindert, solange die Blockierschutzeinrichtung intakt ist, und die ein vom Antrieb (1) axial verschiebbares Betätigungselement (6) aufweist, dadurch **gekennzeichnet**, daß die axiale Verschiebung des Betätigungselements (6) eine im wesentlichen radiale Bewegung einer Verriegelungsvorrichtung (31, 31') zur Folge hat, wobei die Verriegelungsvorrichtung (31, 31') je nach ihrer radialen Position eine axiale Bewegung eines Ansteuerelementes (9) sperren oder freigeben kann.

2. Bremskraftregler nach Anspruch 1, dadurch **gekennzeichnet,** daß die Sperrvorrichtung eine gehäusefeste Zwischenhülse (8) aufweist, die im wesentlichen radiale Löcher (34, 34') besitzt, in welchen mindestens zwei als Verriegelungsvorrichtung dienende Verriegelungselemente (31, 31') geführt sind, die in radialer Richtung dicker sind als die Wand der Zwischenhülse (8) und die bei intakter Blockierschutzeinrichtung vom Betätigungselement (6) in einer Position gehalten werden, wo sie eine Bewegung des Ansteuerelementes (9) in Richtung auf den elektromagnetischen Antrieb (1) sperren, während bei defekter Blockierschutzeinrichtung das Betätigungselement (6) so axial verschoben wird, daß es die Verriegelungselemente (31, 31') so weit in einer radialen Ausnehmung (7) aufzunehmen vermag, daß die Bewegung des Ansteuerelementes (9) auf den Antrieb (1) zu freigegeben wird.

3. Bremskraftregler nach Anspruch 2, dadurch **gekennzeichnet,** daß das Betätigungselement (6) kolbenförmig gestaltet ist, und daß das Ansteuerelement (9) topfartig mit Öffnung zum Antrieb (1) hin die Zwischenhülse (8) und das Betätigungselement (6) umgibt, welches durch die Zwischenhülse (8) verläuft.

4. Bremskraftregler nach Anspruch 2 oder 3,dadurch **gekennzeichnet,** daß die radiale Ausnehmung (7) im Betätigungselement (6) von einer umlaufenden Nut mit abgeschrägten Rändern gebildet wird.

5. Bremskraftregler nach einem der vorhergehenden Ansprüche, dadurch **gekennzeichnet,** daß das Betätigungselement (6) mit einem Magnetanker (5) verbunden ist, welcher von einer elektrischen Spule (2) umgeben ist, die bei intakter Blockierschutzeinrichtung stromdurchflossen ist und den Magnetanker (5) gegen die Kraft einer Druckfeder (4) in ihr Magnetfeld zieht.

6. Bremskraftregler nach einem der vorhergehenden Ansprüche, dadurch **gekennzeichnet,** daß das Ansteuerelement (9) mit einer Steuerkraft, z.B Steuerfeder (14) beaufschlagt ist, die den Umschaltdruck des Bremskraftreglers bestimmt.

7. Bremskraftregler nach Anspruch 4, dadurch **gekennzeichnet,** daß die Steuerkraft lastabhängig ist.

8. Bremskraftregler nach einem der vorhergehenden Ansprüche, dadurch **gekennzeichnet,** daß es sich um einen Twinregler handelt und das Ansteuerelement (9) ein Übetragungsglied (15) beaufschlagt, welches auf beide Druckregeleinheiten gemeinsam einwirkt.

9. Bremskraftregler nach einem der vorhergehenden Ansprüche, dadurch **gekennzeichnet,** daß das Ansteuerelement (9) in einem druckmittelfreien Raum (22) direkt oder indirekt mindestens einen Regelkolben (19, 19') beaufschlagt, der abgedichtet aus einer mit Druckmittel gefüllten, gestuften Bohrung (20, 20') herausragt und an seinem in der Bohrung (20, 20') befindlichen Ende ein Ventil aufweist, dessen Ventilschließglied (26, 26') sich in einem Hohlraum (29, 29') im Regelkolben (19, 19') befindet und von einer Druckfeder (30, 30') von der Seite des Ansteuerelementes (15) her auf einen Ventilsitz (25, 25') am Ende des Regelkolbens (19, 19') hin beaufschlagt ist, wobei am Ventilschließglied (26, 26') ein Stößel (32, 32') anliegt, welcher durch den ventilsitz (25, 25') hindurch aus dem Regelkolben (19, 19') ragt und sich bei gesperrtem Regler an einer die Bohrung begrenzenden Stirnseite (33, 33') abstützt.

10. Bremskraftregler nach Anspruch 7, dadurch **gekennzeichnet,** daß auch bei gesperrtem Regler jeder Regelkolben (19, 19') axial beweglich ist, wobei der mögliche Hub kleiner ist, als der schließweg des Ventils (25, 26; 25', 26') am Ende des Regelkolbens (19, 19').

11. Bremskraftregler nach einem der vorhergehenden Ansprüche, dadurch **gekennzeichnet,** daß der auslaßseitige Abschnitt einer jeden einen Regelkolben (19, 19') enthaltenden Bohrung (20, 20') mit einer Vorrichtung versehen ist, welche dazu geeignet ist, den auslaßseitigen Druck in der Bohrung durch Volumenvergrößerung zu senken, wenn die Blockierschutzeinrichtung während einer Bremsbetätigung ausfällt.

## Claims

1. A brake force controller for the rear wheel brakes of an automotive vehicle including an anti-lock brake system, the brake force controller being provided with a lockout arrangement including an electromagnetic drive (1) which prevents the brake force controller from performing its pressure reducing function as long as the anti-lock control is functioning properly, and which includes an actuating element (6) displaceable by the drive (1) in an axial direction,
**characterized** in that the axial displacement of the actuating element (6) results in a substantially radial movement of an interlocking apparatus (31, 31'), the interlocking apparatus (31, 31'), depending on its radial position, being capable of locking or releasing an axial movement of a control element (9).

2. A brake force controller as claimed in claim 1,
**characterized** in that the lockout arrangement has an intermediate bushing (8) which is fixed to the housing and is formed with substantially radial holes (34, 34') in which at least two interlocking elements (31, 31') serving as an interlocking apparatus are guided which are greater in a radial dimension than the wall of the intermediate bushing (8) and which, as long as the anti-lock control is functioning properly, are retained in a position by the actuating element (6) in which they lock a movement of the control element (9) in the direction of the electromagnetic drive (1), while, with the anti-lock control malfunctioning, the actuating element (6) is slid axially such that it is capable of accommodating the interlocking elements (31, 31') within a radial recess (7) to such an extent that the movement of the control element (9) towards the drive (1) is released.

3. A brake force controller as claimed in claim 2,
**characterized** in that the actuating element (6) has a piston-shaped configuration, and in that the control element (9) receives the intermediate bushing (8) and the actuating element (6), which extends through the intermediate bushing (8), in the manner of a cup having its opening toward the drive (1).

4. A brake force controller as claimed in claim 2 or in claim 3,
**characterized** in that the radial recess (7) of the actuating element (6) is formed of a circumferential groove with bevelled edges.

5. A brake force controller as claimed in anyone of the preceding claims,
**characterized** in that the actuating element (6) is connected to a magnetic armature (5) which is surrounded by an electric coil (2), through which current flows as long as the anti-lock control is functioning properly and which attracts the magnetic armature (5) into its magnetic field in opposition to the force of a compression spring (4).

6. A brake force controller as claimed in anyone of the preceding claims,
**characterized** in that the control element (9) is subjected to a control force, for example control spring (14), which determines the change-over pressure of the brake force controller.

7. A brake force controller as claimed in claim 4,
**characterized** in that the control force is varied in dependence on load.

8. A brake force controller as claimed in anyone of the preceding claims,
**characterized** in that the controller is a twin-type controller, and in that the control element (9) acts on a transmission element (15) which acts on both pressure control units in common.

9. A brake force controller as claimed in anyone of the preceding claims,
**characterized** in that, within a chamber (22) being free of pressure fluid, the control element (9) acts directly or indirectly on at least one control piston (19, 19') which sealedly projects out of a stepped bore (20, 20'), filled with pressure fluid, and which at its end located within the bore (20, 20') is furnished with a valve whose valve closing member (26, 26') is positioned within a cavity (29, 29') in the control piston (19, 19') and is subject to the action of a compression spring (30, 30') directed from the side of the control element (15) toward a valve seat (25, 25') at the end of the control piston (19, 19'), a tappet (32, 32') being abutted against the valve closing member (26, 26'), which tappet projects through the valve seat (25, 25') out of the control piston (19, 19') and is supported at a front side (33, 33') defining the bore, when the controller is locked.

10. A brake force controller as claimed in claim 7,
**characterized** in that each control piston (19, 19') is axially movable, even if the controller is locked, the potential stroke being smaller than the closing travel of the valve (25, 26; 25', 26') at the end of the control piston (19, 19').

11. A brake force controller as claimed in anyone of the preceding claims,
**characterized** in that the outlet-side section of each bore (20, 20') containing one control piston (19, 19') is provided with an apparatus which is capable of reducing the outlet-side pressure within the bore by an increase of the volume when the anti-lock control fails during operation of the brakes.

## Revendications

1. Régulateur de puissance de freinage pour le freinage des roues arrière d'un véhicule automobile comportant une installation de freinage anti-blocage, qui présente un dispositif de coupure avec un entraînement électromagnétique (1), qui coupe le régulateur de puissance de freinage dans sa fonction de réduction de pression aussi longtemps que le dispositif anti-blocage est intact et qui présente un élément de manoeuvre (6) déplaçable axialement par l'entraînement (1), caractérisé en ce que le déplacement axial de l'élément de manoeuvre (6) a pour conséquence un déplacement sensiblement radial d'un dispositif de verrouillage (31, 31'), le dispositif de verrouillage (31, 31') pouvant couper ou libérer un déplacement axial d'un élément de commande (9) selon sa position radiale.

2. Régulateur de puissance de freinage selon la revendication 1, caractérisé en ce que le dispositif de coupure présente une douille intermédiaire (8) fixée sur le boîtier, qui possède des orifices sensiblement radiaux (34, 34'), dans lesquels au moins deux éléments de verrouillage (31, 31') servant de dispositif de verrouillage sont guidés, lesdits éléments étant plus épais dans la direction radiale que la paroi de la douille intermédiaire (8) et étant maintenus par l'élément de manoeuvre (6) lorsque le dispositif anti-blocage est intact dans une position dans laquelle ils coupent un déplacement de l'élément de commande (9) dans la direction de l'entraînement électromagnétique (1), tandis que, lorsque le dispositif antipatinage est défectueux, l'élément de manoeuvre (6) est déplacé axialement de telle sorte qu'il puisse recevoir les éléments de verrouillage (31, 31') dans un évidement radial (7) assez largement pour que le déplacement de l'élément de commande (9) vers l'entraînement (1) soit libéré.

3. Régulateur de puissance de freinage selon la revendication 2, caractérisé en ce que l'élément de manoeuvre (6) a la forme d'un piston et l'élément de commande (9) a la forme d'un pot avec une ouverture vers l'entraînement (1) et entoure la douille intermédiaire (8) et l'élément de manoeuvre (6), qui s'étend à travers la douille intermédiaire (8).

4. Régulateur de puissance de freinage selon la revendication 2 ou 3, caractérisé en ce que l'évidement radial (7) de l'élément de manoeuvre (6) est formé d'une rainure périphérique avec des collets chanfreinés.

5. Régulateur de puissance de freinage selon l'une quelconque des revendications précédentes, caractérisé en ce que l'élément de manoeuvre (6) est relié à une armature magnétique (5) qui est entourée par une bobine électrique (2), qui est parcourue par un courant lorsque le dispositif antipatinage est intact et qui attire l'armature magnétique (5) à l'encontre de la force d'un ressort de compression (4) dans son champ magnétique.

6. Régulateur de puissance de freinage selon l'une quelconque des revendications précédentes, caractérisé en ce que l'élément de commande (9) est sollicité par une force de commande, par exemple, un ressort de commande (14), qui détermine la pression de permutation du régulateur de puissance de freinage.

7. Régulateur de puissance de freinage selon la revendication 4, caractérisé en ce que la force de commande dépend de la charge.

8. Régulateur de puissance de freinage selon l'une quelconque des revendications précédentes, caractérisé en ce qu'il s'agit d'un régulateur jumelé et l'élément de commande (9) sollicite un élément de transmission (15), qui agit sur les deux unités de réglage de pression conjointement.

9. Régulateur de puissance de freinage selon l'une quelconque des revendications précédentes, caractérisé en ce que l'élément de commande (9) sollicite dans un espace exempt d'agent de pression (22) directement ou indirectement au moins un piston de réglage (19, 19'), qui est rendu étanche et fait saillie d'un alésage étagé (20, 20') rempli d'agent de pression et présente à son extrémité dans l'alésage (20, 20') une soupape, dont l'élément de fermeture (26, 26') se trouve dans un espace creux (29, 29') du piston de réglage (19, 19') et est pressé par un ressort de compression (30, 30') vers le côté de l'élément de commande (15) sur un siège de soupape (25, 25'), à l'extrémité du piston de réglage (19, 19'), un poussoir (32, 32') s'appliquant sur l'élément de fermeture de soupape (26, 26'), ce poussoir dépassant à travers le siège de soupape (25, 25') du piston de réglage (19, 19') et s'appuyant sur une face frontale (33, 33') délimitant l'alésage lorsque le régulateur est coupé.

10. Régulateur de puissance de freinage selon la revendication 7, caractérisé en ce que chaque piston de réglage (19, 19') peut être déplacé axialement même dans le cas où le régulateur est coupé, la course éventuelle étant plus petite que la course de fermeture de la soupape (25, 26; 25', 26') à l'extrémité du piston de réglage (19, 19').

11. Régulateur de puissance de freinage selon l'une quelconque des revendications précédentes, caractérisé en ce que la section côté échappement de chaque alésage (20, 20') contenant un piston de réglage (19, 19') est pourvue d'un dispositif qui convient pour abaisser la pression côté échappement dans l'alésage par augmentation de volume lorsque le dispositif anti-blocage fait défaut lors de la commande du frein.
